# EUROPEAN PATENT APPLICATION

(11) **EP 2 746 654 A1**
(43) Date of publication of application: **25.06.2014**
(21) Application number: 14160361.3
(22) Date of filing: 14.04.2009
(51) Int. Cl.: F21V 33/00, H05B 33/08, H05B 37/02

(54) **Method of viewing a subject**

(30) Priority: 14.04.2008 US 44768
(62) Divisional of application: 09755532.0
(71) Applicant: Dignity Health, Phoenix, Arizona 85013 (US)
(72) Inventor: Macknik, Stephen L., Anthem, AZ 86086 (US); Martinez-Conde, Susana, Anthem, AZ 86086 (US)
(74) Representative: Croston, David

(57) **Abstract**

A method and apparatus are provided for viewing a subject. The method includes the steps of providing a predetermined visual contrast among image details of the subject and maintaining the visual contrast for a predetermined time period of less than 100 milliseconds.

## Description

### Field of the Invention

The field of the invention relates to the dynamics of seeing and more particularly, to visual perception of subjects.

### Background of the Invention

This application is a continuation-in-part of U.S. Provisional Patent Application Number 61/044,768 filed on April 14, 2008 (pending).

In the past, psychophysical studies of brightness perception have focused on the perception of spatial contrast illusions, in which each simultaneously presented stimuli affects the other's brightness across space. These and later studies formed the basis of much of the current research understanding of brightness perception, in which the two main stimulus parameters that contribute to brightness are physical intensity and stimulus duration.

For example, consider the role of physical intensity on brightness perception. The just-noticeable difference in brightness (Δ**I**) between a target and its background is a function of the physical luminosity of the stimuli (**I**). This principle, ***ΔI*/*I*=*k*,** first formally derived by G. T. Fechner in 1860, was originally discovered by M. P. Bouguer in 1760 and later rediscovered by E. H. Weber in 1843, and has become known as Weber's law (or the "Weber-Fechner law").

Psychophysical magnitude may be defined as ***Ψ=k • log I*,** where ***Ψ*** is perceptual intensity, and ***I*** is physical intensity; ***k*** is a modality or task specific constant. The Weber-Fechner law was redrafted into Stevens' Power Law in the 1960s, which no longer assumes, as Fechner did, that the perceptual magnitude of one just-noticeable difference threshold is the same as any other ***Ψ= k (I)*".** These psychophysical laws describe the relationship between physical intensity and perceptual intensity for most environments.

The role of stimulus duration on brightness perception may also be considered. In this regard, the perceived stimulus intensity also varies as a function of duration. A. M. Bloch (Bloch's law), asserts that a short-duration visual stimulus of high physical intensity or a longer-duration target of lower intensity can appear equally bright. Research by A. Brock and D. Sulzer (Broca-Sulzer), in effect, states that as the duration of a flashed target increases, the perceived brightness of the target first increases, but then decreases. Many people in the last century have discussed either Bloch's Law or the Broca-Sulzer effect, but none of them have explicitly discussed the discrepancy between these two principles. Because of the importance of vision on human endeavors, a need exists for methods of exploiting the benefits of these principles.

### Summary

A method and apparatus are provided for viewing a subject. The method includes the steps of providing a predetermined visual contrast among image details of the subject and maintaining the visual contrast for a predetermined time period of less than 100 milliseconds.

### Brief Description of the Drawings

FIG. 1 is an electrical recording of a neuron of an anesthetized monkey receiving at least some visual stimuli in accordance with illustrated embodiments of the invention;
FIG. 2 is an electrical recording of intracellular voltage as a function of stimulus duration of the monkey of FIG. 2;
FIGs. 3A-C are test results of subjects showing the benefits of visual stimuli in accordance with illustrated embodiments of the invention;
FIG. 4 is a system for visually stimulating a subject in accordance with an illustrated embodiment of the invention; and
FIG. 5 depicts a timing diagram of visual stimuli produced by the system of FIG. 4.

### Detailed Description of an Illustrated Embodiment

The duration of a stimulus has been found to affect its perceived brightness. Bloch's Law, also called the time-reciprocity law, asserts that as the duration of a visual stimulus increases, its detection threshold decreases (without increasing the actual luminance of the stimulus). Bloch's law operates out to temporal durations of up to 30-130 msec (depending on viewing conditions), at which the effect plateaus, according to the literature (that is, further increases in duration neither increase nor decrease stimulus brightness). Bloch's Law presumably operates due to some sort of integrative action of the visual system, although the neural correlates are not known. Reports by A. Broca and D. Sulzer in 1902, and W. McDougall in 1903 posit that as a suprathreshold stimulus increases in duration it first becomes brighter and then dimmer as the stimulus duration increases. Interestingly, a plateau in stimulus brightness with increased stimulus duration was not reported, as one might expect from the literature associated with Bloch's law. Moreover, many studies of the temporal dynamics of brightness perception examine the brightness of flicker, which confounds stimulus duration, the interval between flashes (called the inter-stimulus interval), and the effects of repetition. With these studies, one cannot know whether perceived brightness is due to stimulus duration or one of these other factors. E. Brucke in 1863 and S. H. Bartley in 1947-8 reported that the brightness of individual flashes varied as a function of flash duration (what is now referred to as the "Brucke-Bartley Effect"). However, they determined this by measuring the brightness of flickering light and calculating the inverse of the flicker rate to determine the duration of the stimulus, not by directly measuring the brightness of a single stimulus as a function of duration. That is, because they used flickering stimuli, they too confounded duration, inter-stimulus interval, and various other flicker-related factors that could have affected brightness.

Physiological measurements of flicker-related responses have been made in the visual cortex. The results showed increased activity at the points where flicker looked brightest. However, these measurements provided only average firing rates as a function of flicker rate.

One factor in the perceived brightness of a light source is the temporal dynamics of the stimulus: the brightness of a flash of light can vary as a function of both its luminance and its duration. (As used herein the term "brightness" is also used to mean "contrast" and/or "salience" for the purposes of this description.) Contrast may be measured using any of a number of conventional standards (e.g., Michelson contrast, weber contrast, RMS contrast), although weber contrast is the preferred method.

For further clarification (and as used herein), radiance will be used to refer to the amount of light produced by a light-emitting object (e.g., a light bulb) and luminance is the amount of light (within the human visible spectrum) produced by a light-emitting object (e.g., a light bulb). In contrast, reflectance is the amount of light that a surface (i.e., a white versus a black object) is reflecting within a given spectrum.

Similarly, illumination is the combination of reflectance and radiance (or luminance). This is in contrast to the colloquial use of the word which means the amount of light that is shined onto a surface.

The central hypothesis developed herein is that a user can decrease the power output of a light source, without decreasing brightness, by decreasing the duration of the stimulus to an optimal range. However, the precise neural mechanisms that underlie brightness perception as a function of stimulus duration are unknown. This gap in knowledge has prevented the optimization of stimulus power to perceived brightness. The rationale of the invention is that by understanding the temporal dynamics of stimulus duration and brightness perception, a user will understand the parameters necessary to optimize light source power output for human perception, thereby optimizing power efficiency. The invention is innovative because it is the first to correlate the perception of brightness of single flashes of light directly to the underlying neuronal processes in humans and primates.

A first question considered herein is whether there is a peak or a plateau in stimulus brightness as a function of duration. Previous studies have disagreed on whether brightness peaks or plateaus as a function of stimulus duration. However, no previous study has examined the brightness of single-flashed, randomly presented, suprathreshold stimuli in naive subjects.

A second question considered herein is what parts of the neural response mediates the effect of duration on brightness perception. One hypothesis is that the interplay between the magnitude of the neural onset response and after-discharge mediate the peak in brightness perception as a function of duration. In order to answer this question, the neural response of primary cortical single neurons in awake monkeys was recorded, while simultaneously assessing the perceived brightness of stimuli of varied duration.

A third question is whether brain activity can be correlated with stimulus duration and dissociated from stimulus power. In this regard, the hypothesis is that human retinotopic visual cortical areas will vary in their activity (e.g., as measured using a Blood Oxygen Dependent Signal (BOLD)) in correlation to perception but dissociated from stimulus luminance. It has previously been shown that as luminance increases, so does the BOLD signal. However, no previous functional Magnetic Resonance Imaging (fMRI) study has differentially varied stimulus power as a function of both stimulus duration and luminance.

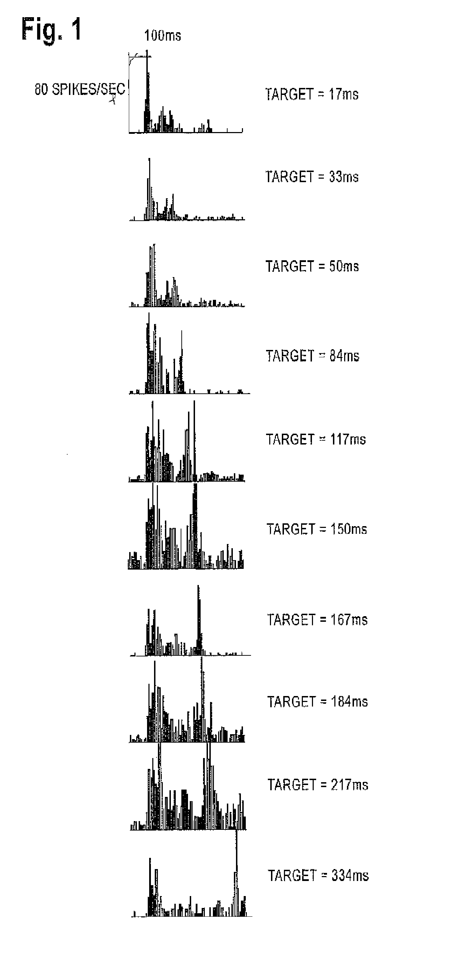

The role of stimulus duration on the neural response may be considered next. In this regard, Fig 1 shows a recording of the evolution of the response from a single neuron in cortical area V1 of an anesthetized monkey to a stimulus of optimal dimensions and varied durations. As shown, the magnitude of the after-discharge response grows as the target duration increases from 17 milliseconds (ms) to 443 ms.

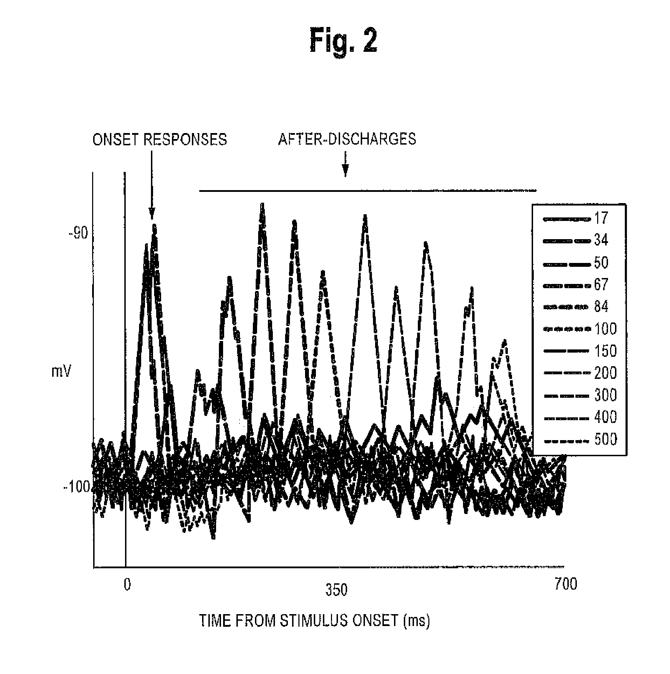

Increasing duration has been found to result in an increased magnitude of the onset response and after-discharge up to a duration of approximately 83 ms, after which only the after discharge increased, then decreased, in magnitude. Intracellular neural data from anesthetized cat test subjects in area V1 is shown in FIG. 2. As shown, the magnitude of the onset response grows as a function of duration for short durations (e.g., less than 84 ms) and then after-discharge first grows and then shrinks as a function of duration. These findings reveal why the optimized stimulus appears brighter, despite being of lower energy: it evokes stronger onset and after-discharge responses.

With regard to the first question above, if brightness shows a plateau as a function of duration then it would be expected that the psychometric curves would shift for short durations and then to stop shifting for long durations. If brightness peaks then the curves will shift for short durations, and then shift back (at least partially) for longer durations.

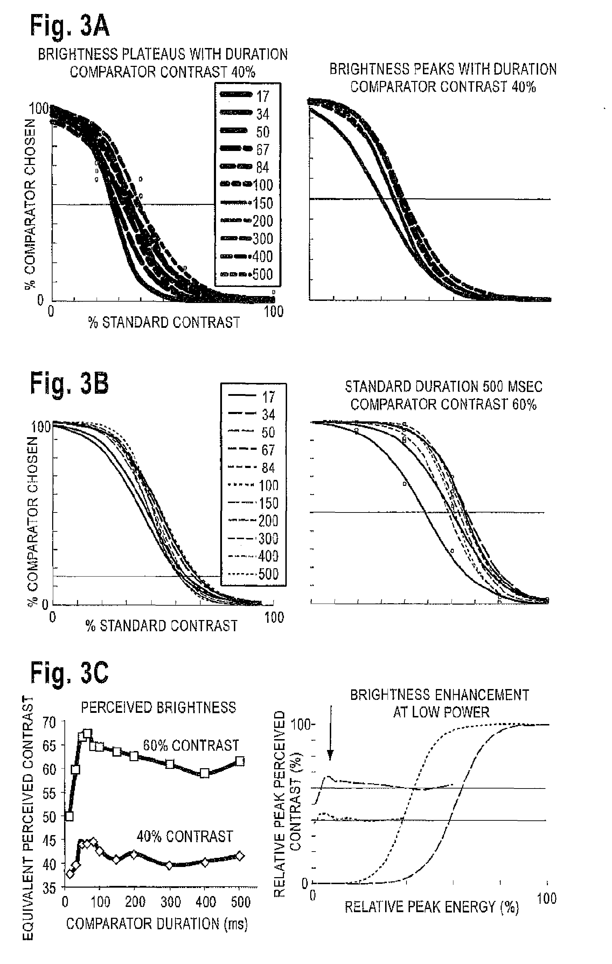

FIG. 3A-C shows a set of test results that compare brightness and duration of stimuli. FIG. 3A (left side) shows brightness plateaus with duration and FIG. 3A (right side) shows brightness peaks with duration. FIG. 3B compares brightness at 30% contrast (left side) and at 60% (right side).

FIG. 3C, left side, shows the equivalent perceived contrast of panel 3B (50% crossing points) as a function of time. FIG. 3C, right side, shows the perceived contrast as a function of power (output energy/sec) for stimuli of various durations versus various luminances. The dark blue curves represent the perceived contrast of a 60% contrast stimulus as a function of duration, compared to a light blue curve of a stimulus of 300 ms duration with varied luminance. The arrow in FIG. 3C, right side, points to the stimulus with optimal brightness as a function of stimulus power. The arrow shows that an 84 ms stimulus of 60% contrast has the same brightness as a 300 ms stimulus of 70% contrast. The red curves in FIG. 3C, right side, compare a 30% contrast stimulus of varied durations to a 300 ms stimulus of varied luminances.

Turning now to uses of the invention, a major component of energy consumption is dedicated to the powering of light-emitting devices that aid in visual perception. Light bulbs, video monitors, warning lights on ground, air and maritime vehicles etc. must all convert electrical power into photonic energy of sufficient luminance to sustain visibility and detection under various conditions.

FIG. 3C demonstrates that the human eye has an equal ability in detecting an 84 ms stimulus at 60% contrast as a 300 ms stimulus at 70% contrast. However, the 84 ms stimulus at 60% contrast consumes one-sixth the power of the 300 ms stimulus at 70% contrast. Moreover, the relatively gradual slope of the curves on the left side of FIG. 3C (on opposing sides of the optimal time of 84 ms) shows that the benefits can be achieved with substantial deviation from the optimized value. Because of the gradual slope, it is believed that a significant benefit can be obtained from operating light fixtures to give visual stimuli with a duration within a range of values. Under one preferred embodiment, the range is from 80-88 ms. Under another embodiment, the range could be anywhere from 75 to 100 ms. Moreover, comparison of the 30% and 60% contrast values show that the optimized time value of 83 ms is more important than contrast.

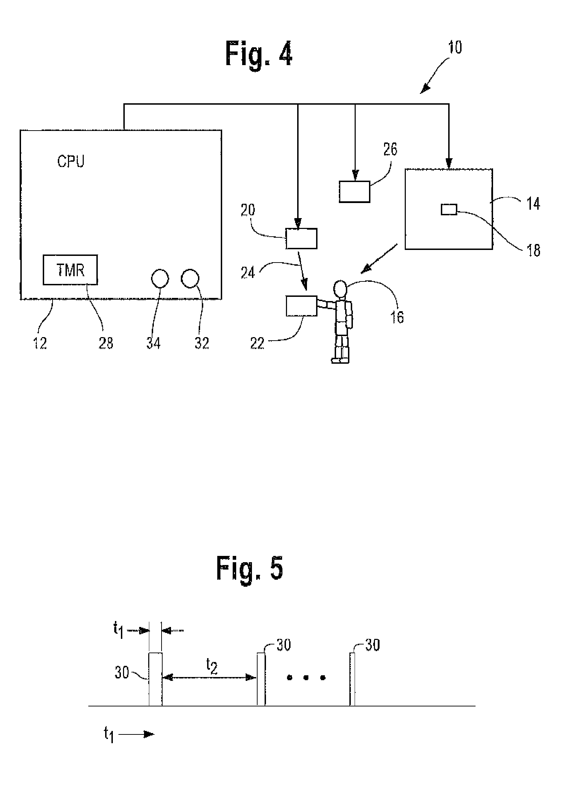

FIG. 4 shows a visual stimulus system 10 that may be used to demonstrate aspects of the invention. In this regard, the system 10 includes a processing unit 12 that may be used to present visual stimuli via one or more light emitting devices 20, 26 or to display stimulus 18 on a display 14 to a test subject 16.

In order to exploit this ability of the human eye, the system 10 of FIG. 4 may operate under a number of different modes depending upon the stimuli to be presented. For example, in the case of warning lights, the stimuli may simply be presented using a light emitting device 26 operating with an activation or ON time (t1) of about 84 ms.and a deactivated or OFF time (t2) (as shown in FIG. 5) with an appropriate repetition rate. The repetition rate may be chosen as any value that attracts attention or at some chosen rate that eliminates flicker.

The visual contrast of the subject (i.e., the light 26) in this context would be determined by the distance of an observer to the warning light and background of the light. For example, an observer 100 feet from a warning light would require a higher luminance level than an observer 10 feed from the warning light to achieve some optimal contrast. Similarly, if the light 26 where operating against a daylight sky, then the contrast would be much less than a night time sky. In general, the light pulse 30 shown in FIG. 5 would be chosen to have a 84 ms length and would be adapted in power to a daylight or night time sky to achieve the desired 60% contrast.

The time t2 would be adjusted as necessary to the needs of a warning light. In this regard, a warning light may require a time t2 that flickers in order to attract attention. A value of t2 equal to 500 ms to 1 second may be sufficient for this purpose.

It should be noted that prior art imaging devices could not operate at a repetition rate below 30 Hz because of flicker. However, the system 10 can operate significantly below 30 Hz because of the visual masking produced by the 84 ms pulse.

The invention can also be extended to other types of lighting and/or imaging devices. For example, the system 10 could be used for room or task lighting. In the case of a person reading a book 22, a level of light 24 to achieve 60% contrast at some distance (e.g., 3 feet) from a light source 20 can be easily calculated. Once the required light level has been calculated, a power source 12 operating under control of a timer 28 may activate the light source 20 with an ON time of 84 ms followed by an appropriate OFF time. For convenience, the power source 12 may be synchronized with the power utility to provide a repetition rate of some fraction of 60 cycles per second (e.g., 20 Hz).

In the case of a person 16 reading a book 22, a light level control 32 may be provided through which the user 16 could increase the illumination produced by the 84 ms pulse to improve contrast in the event of vision problems. Similarly, a repetition rate control 34 may be provided to adjust the time value t2 in order to avoid flicker.

The system 10 can also be used for computers, television monitors or displays 14 for displaying stimuli in the form of images 18. In this case, the power source 12 may be a central processing unit of a computer system 10. Contrast can be calculated based upon the distance of a user 16 from the display 13 and controlled by the CPU 12.

The use of optimized ON time discussed above can result in displays that are constructed of more efficient materials. For example, in the past, displays 14 were required to have pixel elements that could continuously maintain an image between raster scans. However, as demonstrated above, pixels only need hold an image for approximately 84 ms at a target contrast level and an appropriate repetition rate. This can result in display devices that can operate with a much smaller duty cycle thereby reducing cooling concerns and the size of drive circuits.

The optimized ON time can also be used with display devices operating under a constant lighting source. For example, liquid crystal displays (LCDs) use an electric signal to create a display that becomes visible under a constant light source. However, rather than requiring a constant image signal to the LCD, the image signal can be reduced to an ON time that only need create an image for 84 ms at an acceptable repetition rate. This also has the ability to reduce the power consumed by LCD displays.

A specific embodiment of method and apparatus for viewing a subject has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

**The invention also comprises:**
1. A method for viewing a subject comprising; providing a predetermined visual contrast among image details of the subject; and maintaining the visual contrast for a predetermined time period of less than 100 milliseconds.
2. The method for viewing a subject as in 1 wherein the time period further comprises about 83 milliseconds.
4. The method for viewing a subject as in 1 wherein the step of providing the visual contrast further comprises illuminating the subject.
3. The method for viewing a subject as in 1 wherein the step of providing the visual contrast further comprises activating a light source.
3. The method for viewing a subject as in 1 further comprising repeating the providing visual contrast and maintaining the visual contrast steps at a predetermined repetition rate.
6. The method for viewing a subject as in 1 further comprising determining a contrast ratio for the subject based upon a visual content of the subject.
7. The method for viewing a subject as in 6 further comprising adjusting a illumination level of the subject to achieve the determined contrast ratio.
8. An apparatus for viewing a subject comprising: means for providing a visual contrast among image details of the subject; and means for maintaining the visual contrast for a predetermined time period of less than 100 milliseconds.
9. The apparatus for viewing a subject as in 8 wherein the time period further comprises about 83 milliseconds.
10. The apparatus for viewing a subject as in 8 wherein the means for providing the visual contrast further comprises means for viewing a subject illuminating the subject.
11. The apparatus for viewing a subject as in 8 wherein the means for providing the visual contrast further comprises means for activating a light source.
12. The apparatus for viewing a subject as in 8 further comprising means for repeating the providing visual contrast and maintaining the visual contrast steps at a predetermined repetition rate.
14. The apparatus for viewing a subject as in 8 further comprising means for determining a contrast ratio for the subject based upon a visual content of the subject.
13. The apparatus for viewing a subject as in 14 further comprising means for adjusting a illumination level of the subject to achieve the determined contrast ratio.
13. An apparatus for viewing a subject comprising: a visual contrast among image details of the subject; and a controller that maintains the visual contrast for a predetermined time period of
   less than 100 milliseconds.
13. The apparatus for viewing a subject as in 13 wherein the time period further comprises about 83 milliseconds.
16. The apparatus for viewing a subject as in 13 wherein the visual contrast further comprises a light source for viewing a subject illuminating the subject.
17. The apparatus for viewing a subject as in 13 wherein the means for providing the visual contrast further comprises a controller that activates the light source.
19. The apparatus for viewing a subject as in 13 further comprising a timer that repeats the provided visual contrast at a predetermined repetition rate.
20. The apparatus for viewing a subject as in 13 further comprising means for determining a contrast ratio for the subject based upon a visual content of the subject.
21. The apparatus for viewing a subject as in 14 further comprising a light control that adjusts a illumination level of the subject to achieve the determined contrast ratio.

## Claims

1. A method of decreasing a power output of a light source without decreasing brightness,
providing luminance from the light source; and
improving a perceived visual contrast of a subject against the background while decreasing power output of the light source without decreasing brightness by activating the light source for a predetermined time period of less than 100 milliseconds followed by deactivating the light source and repeating said activating and deactivating steps with an appropriate repetition rate sufficient to optimize brightness and contrast.

2. The method as in claim 1 wherein the time period further comprises about 83 milliseconds; or
wherein the step of improving the visual contrast further comprises illuminating the subject; or
wherein the step of improving the visual contrast further comprises activating a light source; or
further comprising repeating the activating and deactivating steps at a predetermined repetition rate.

3. The method as in claim 1 further comprising determining a contrast ratio for the subject based upon a visual content of the subject.

4. The method as in claim 3 further comprising adjusting a illumination level of the subject to achieve the determined contrast ratio.

5. An apparatus for decreasing a power output of a light source without decreasing brightness comprising:
a light source that provides luminance;
means for improving a perceived visual contrast of a subject against the background while decreasing power output of the light source without decreasing brightness by activating the light source for a predetermined time of less than 100 milliseconds followed by deactivating the light source and repeating said activating and deactivating steps with an appropriate repetition rate and duration sufficient to optimize brightness and contrast.

6. The apparatus as in claim 8 wherein the time period further comprises about 83 milliseconds; or
wherein the means for improving the visual contrast further comprises means for illuminating the subject; or
wherein the means for improving the visual contrast further comprises means for activating [[a]] the light source; or
further comprising means for repeating the activating and deactivating steps at a predetermined repetition rate.

7. The apparatus as in claim 5 further comprising means for determining a contrast ratio for the subject based upon a visual content of the subject.

8. The apparatus as in claim 7 further comprising means for adjusting a illumination level of the subject to achieve the predetermined visual contrast.

9. An apparatus for decreasing a power output of a light source without decreasing brightness comprising:
a light source producing luminance;
a central processing unit that calculates a luminance level to improve a perceived visual contrast of a subject displayed against the background to a predetermined level; and
a controller that maintains the predetermined level of visual contrast by activating the light source for a predetermined time period of less than 100 milliseconds while decreasing power output and without decreasing brightness followed by deactivating the light source and repeating said activating and deactivating with an appropriate repetition rate and duration sufficient to optimize brightness and contrast.

10. The apparatus as in claim 9 wherein the time period further comprises about 83 milliseconds; or
wherein the visual contrast further comprises a light source illuminating the subject, or
wherein the means for providing the visual contrast further comprises a controller that activates the light source; or
further comprising a timer that repeats the provided visual contrast at a predetermined repetition rate.

11. The apparatus as in claim 9 further comprising means for determining a contrast ratio for the subject based upon a visual content of the subject.

12. The apparatus as in claim 11 further comprising a light control that adjusts a illumination level of the subject to achieve the determined contrast ratio.
